# EUROPEAN PATENT SPECIFICATION

(11) **EP 4 632 239 B1**
(45) Date of publication and mention of the grant of the patent: **26.08.2026**
(21) Application number: 24169781.2
(22) Date of filing: 11.04.2024
(51) Int. Cl.: F16B 5/02, F16B 33/00, F16B 43/00

(54) **MOUNTING ARRANGEMENT AND METHOD FOR MOUNTING A BATTERY MODULE**
MONTAGEANORDNUNG UND VERFAHREN ZUR MONTAGE EINES BATTERIEMODULS
AGENCEMENT DE MONTAGE ET PROCÉDÉ DE MONTAGE D'UN MODULE DE BATTERIE

(43) Date of publication of application: 15.10.2025
(73) Proprietor: VOLVO TRUCK CORPORATION, 405 08 Göteborg (SE)
(72) Inventor: LEBEDEVA, Svetlana, 435 37 MÖLNLYCKE (SE); KARSTRÖM, Fredrik, 435 37 MÖLNLYCKE (SE)
(74) Representative: Ström & Gulliksson AB

(56) References cited:
- DE-A1- 102019 005 841
- US-A1- 2018 142 723
- US-B2- 11 646 462

## Description

### TECHNICAL FIELD

The disclosure relates generally to mounting arrangements. In particular aspects, the disclosure relates to a mounting arrangement and method for mounting a battery module to a housing. In particular aspects, the disclosure relates to a mounting arrangement and method for mounting a battery module to a mounting structure. The disclosure can for example be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Within the field of electrically propelled vehicles, large batteries consisting of multiple smaller cells are commonly stacked together to form battery modules. In conventional electrically propelled vehicles, one or more battery modules are often arranged in a stack in a housing, wherein each battery module is slid into its position in the housing. To enable the battery modules to easily slide into position, space is required around the battery module in the housing which is associated with challenges when the battery module is to be fixated relative to the housing in its mounted position due to the fixation often requiring the mating surfaces to be in contact.

To address the aforementioned challenges, brackets or complex fastening systems allowing for bolting in different planes has been utilized.

US 11,646,462 B2 discloses a housing for a traction battery with an installation section.

### SUMMARY

The invention is set out in the independent claims 1 and 12. According to a first aspect of the disclosure, a mounting arrangement for mounting a battery module to a housing of a mounting structure is provided. The mounting arrangement comprises a fastening element adapted to engage the battery module from a first side of the housing facing away from the battery module, a mounting element adapted to be fixed relative to the housing and arranged on a second side of the housing facing the battery module, and a compensating element mounted to the mounting element. The compensating element is adapted to abut to an outer surface of the battery module and to be fixated relative to the housing by the fastening element such that the battery module is fixated at a distance from the second side. The first aspect of the disclosure may seek to achieve a simpler manner of mounting a battery module to a mounting structure. A technical benefit may include that the compensating element may allow for a gap between the parts to be compensated prior to battery module being fixated to the mounting structure. Another technical benefit may include that the mounting element and the compensating element can be mounted beforehand and that a gap can be compensated by adjustment from the outer side of the housing making the mounting operation easier, faster and more user friendly.

Optionally in some examples, including in at least one preferred example, the compensating element may comprise an end portion with an end surface adapted to engage the battery module. A technical benefit may include that the compensating element more efficiently may compensate for distances and shifting tolerances of the housing and the battery module.

Optionally in some examples, including in at least one preferred example, the end portion may comprise a flanged portion provided with the end surface. A technical benefit may include that a more cost-efficient mounting arrangement and more flexible mounting arrangement may be achieved as it may be suitable to use in combination with any type of battery module without requiring any modifications of the outer surface of the battery module.

Optionally in some examples, including in at least one preferred example, the end portion may comprise a conical portion provided with the end surface. A technical benefit may include that the conical surface enables a more secure engagement with the battery module and provides a guide for the adjustment of the compensating element.

Optionally in some examples, including in at least one preferred example, the mounting element and the compensating element may be provided with threading such that the compensating element and the mounting element are in adjustable engagement. A technical benefit may include that the contact force exerted on the battery module by the compensating element may be adjusted in a precise manner allowing for a more secure mounting arrangement.

Optionally in some examples, including in at least one preferred example, the mounting arrangement may further comprise a engagement mechanism adapted to counteract rotation of the mounting element by being arranged such that rotation of the mounting element relative to the housing is blocked due to the mounting element engaging the engagement mechanism. A technical benefit may include that rotation of the mounting element during installation may be prevented, thereby enabling the mounting element to guide the compensating element allowing for the compensating element to more securely engage the battery module. Another technical benefit may include that the mounting element may be fixated to the housing without welding, allowing a more space efficient mounting arrangement. Another technical benefit may include that the mounting element may be slightly rotated and/or moved in a plane orthogonal to the mounting axis to compensate for initial misalignment between the housing and the battery module, e.g. mounting holes in the battery module. Another technical benefit may include that said movement may enable coaxial alignment with a mounting interface, for example a depression, provided on the battery module.

Optionally in some examples, including in at least one preferred example, the engagement mechanism may comprise one or more blocking element adapted to be fix relative to the housing and to engage the mounting element to block rotation of said mounting element. A technical benefit may include that the mounting element may be fixated to the housing without welding, allowing a more space efficient mounting arrangement. Another technical benefit may include that the mounting element may be slightly rotated and/or moved in a plane orthogonal to the mounting axis to compensate for initial misalignment between the housing and the battery module, e.g. mounting holes in the battery module. Another technical benefit may include that said movement may enable coaxial alignment with a mounting interface, for example a depression, provided on the battery module.

Optionally in some examples, including in at least one preferred example, the mounting element may be adapted to be welded onto the housing. A technical benefit include that the mounting element does not rotate when subjected to a load, making the mounting arrangement more secure even when subjected to large loads. Another technical benefit may include that the welded mounting element may accommodate for adjustment of the compensating element in a secure manner, preferably also by the application of torque from the outside of the housing.

Optionally in some examples, including in at least one preferred example, the mounting arrangement may further comprise a cover member adapted to be arranged on the first side of the housing and be fixated to the housing by the fastening element. A technical benefit may include that the cover member clamps the compensating element against the battery module, further improving the stability of the mounting arrangement.

Optionally in some examples, including in at least one preferred example, the mounting arrangement may further comprise a sealing member adapted to seal between the cover member and the first side. A technical benefit may include that water, dirt or air may be prevented from entering inside the housing to the battery module.

Optionally in some examples, including in at least one preferred example, the cover member may comprise a cover through-hole and the fastening element may be adapted to extend through said cover through-hole upon engaging the battery module. A technical benefit may include that that the cover member may be fixated into position by means of the fastening element, whereby less operations are required to mount the components of mounting arrangement to the battery module and housing.

Optionally in some examples, including in at least one preferred example, the fastening element may comprise a head portion adapted to exert a contact force on an outer surface of the cover member upon engaging the battery module, the outer surface being arranged to face away from the first side of the housing. A technical benefit may include that the cover member may be fixated in a non-complex manner and without use of additional fastening means.

Optionally in some examples, including in at least one preferred example, the compensating element may comprise a through-going compensator aperture and the fastening element may be adapted to extend through said compensator aperture upon engaging the battery module. A technical benefit may include that the compensating element is fixated in a simple manner with few operations.

Optionally in some examples, including in at least one preferred example, the mounting arrangement may further comprise a sealing element adapted to seal between the fastening element and the cover member. A technical benefit may include that the risk for water, dirt or air entering into the housing via a space between the fastening element and the cover member is mitigated.

According to a second aspect of the disclosure, a mounting system for an energy storage system such as an energy storage system of a vehicle, marine vessel or motor, or such as an energy storage of a stationary system such as a building and/or a stationary machinery is provided. The mounting system is adapted to support one or more battery modules, the mounting system comprises a mounting structure comprising a housing, and one or more mounting arrangement of any of the herein described examples for mounting the one or more battery modules to the housing. The second aspect of the disclosure may seek to achieve a simpler manner of mounting a battery module to a mounting structure. A technical benefit may include that the compensating element may allow for a gap between the parts to be compensated prior to battery module being fixated to the mounting structure. Another technical benefit may include that the mounting element and the compensating element can be mounted beforehand and that a gap can be compensated by adjustment from the outer side of the housing making the mounting operation easier, faster and more user friendly.

Optionally in some examples, including in at least one preferred example, the one or more mounting arrangement may comprise at least one mounting arrangement adapted to engage a first side surface of a battery module to mount said battery module to the housing and wherein, preferably, the mounting system may further comprise at least one fastening member adapted to engage a second side surface of the said battery module opposite to the first side surface to mount said battery module to the housing. A technical benefit may include that conventional fastening members without compensating functionality may be utilized in combination with mounting arrangements allowing for a more cost-efficient and time efficient mounting of the battery module.

Optionally in some examples, including in at least one preferred example, the mounting system may be further adapted to support a plurality of battery modules arranged in a stacked configuration, whereby the mounting system may comprise a plurality of mounting arrangements for mounting the plurality of battery modules to the housing. A technical benefit may include that multiple battery modules may be mounted to the housing in a simple and cost-efficient manner.

According to a third aspect of the disclosure a vehicle may be provided. The vehicle may comprise one or more battery modules and a mounting system of any of the examples described herein. The third aspect of the disclosure may seek to achieve a more simple manner of mounting a battery module to a mounting structure. A technical benefit may include that the compensating element may allow for a gap between the parts to be compensated prior to battery module being fixated to the mounting structure. Another technical benefit may include that the mounting element and the compensating element can be mounted beforehand and that a gap can be compensated by adjustment from the outer side of the housing making the mounting operation easier, faster and more user friendly.

According to a fourth aspect of the disclosure a method for mounting a battery module to a housing of a mounting structure with a mounting arrangement of any of the examples described herein is provided. The method comprises positioning the battery module in the housing, fixating the mounting element relative to the housing on the second side of the housing, abutting the compensating element to an outer surface of the battery module, and engaging the fastening element from the first side of the housing with the battery module to fixate the compensating element such that the battery module is fixated at a distance from the second side. The fourth aspect of the disclosure may seek to achieve a more simple manner of mounting a battery module to a mounting structure. A technical benefit may include that the compensating element may allow for a gap between the parts to be compensated prior to battery module being fixated to the mounting structure. Another technical benefit may include that the mounting element and the compensating element can be mounted beforehand and that a gap can be compensated by adjustment from the outer side of the housing making the mounting operation easier, faster and more user friendly.

Optionally in some examples, including in at least one preferred example, the method may further comprise mounting the compensating element to the mounting element to adjustably engage the battery module.

Optionally in some examples, including in at least one preferred example, the method may further comprise arranging the cover member on the first side of the housing, and fixating the cover member to the housing with the fastening element. A technical benefit may include that the cover member clamps the compensating element against the battery module, further improving the stability of the mounting arrangement.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle comprising a mounting system according to an example.
**FIG. 2** is a perspective view of a mounting system according to an example.
**FIG. 3A** is a perspective cross-section view of a mounting arrangement according to an example.
**FIG. 3B** is a cross-section of the mounting arrangement of **FIG.3A** from a perspective view.
**FIG. 4** is a cross-section view of a mounting arrangement according to an example.
**FIG. 5** is a cross-section view of a mounting arrangement according to an example.
**FIG. 6** is a cross-section view of a mounting arrangement according to an example.
**FIG. 7** is a schematic flow chart of a method for mounting a battery module to a housing of a mounting structure according to an example.
**FIG. 8** is a schematic flow chart of a method for mounting a battery module to a housing of a mounting structure according to an example.

### DETAILED DESCRIPTION

The detailed description set forth below provides information and examples of the disclosed technology with sufficient detail to enable those skilled in the art to practice the disclosure.

Electrically propelled vehicles, i.e. vehicles that are propelled by means of an electrical motor commonly requires energy storage units in the form of batteries to power the electrical motor. The batteries are associated with challenges as they are heavy and space consuming and requires particular mounting systems for mounting the batteries to the vehicle.

Such mounting systems commonly include a mounting structure to be mounted to a chassis of the vehicle. In order to shield the batteries from the outside environment, provide structural stability and crash safety, the mounting structure commonly includes a housing in which the batteries may be arranged when mounted. Due to shifting tolerances both in the batteries and in the housing, brackets such as L-brackets or particular adjustable fastening arrangements has been used in order to fixate the batteries, commonly provided as battery modules, to the housing. The use of battery modules mounted to the housing allows for easily adaptable and serviceable systems. A challenge with the existing solutions is that they either require complex and expensive adjustable fastening arrangements or a time consuming and complex mounting method.

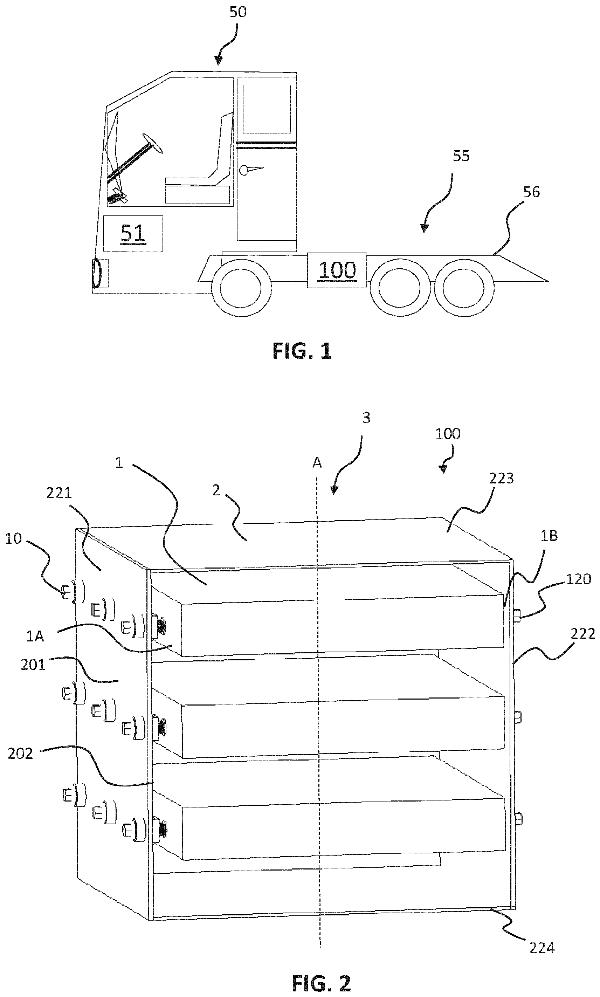

**FIG. 1** is an exemplary vehicle **50** comprising a mounting system **100** according to an example. In the depicted example, the vehicle **50** is a truck but it may be envisioned that the vehicle may be any type of vehicle. Preferably, the vehicle may be a heavy-duty vehicle, such as truck, bus or construction equipment, among other vehicle types. It may also be envisioned that the mounting system **100** is utilized for a marine vessel such as a boat or a a motor and preferably an electrical motor configured to be powered by the battery modules to be mounted in the mounting system. It may also be envisioned that the mounting system **100** may be utilized for a stationary system such as a building and/or a stationary machinery. Accordingly, the mounting system may be for a vehicle **50,** marine vessel, motor or a stationary system including a building and/or a stationary machinery. The mounting system **100** may be for an energy storage system of such a vehicle **50,** marine vessel, motor or stationary system.

The vehicle **50** may comprise an electric motor **51** configured to propel the vehicle **50.** The vehicle **50** may comprise a chassis **55** and the mounting system **100** may be adapted to be mounted to said chassis **55.** In the depicted example, the chassis **55** may comprise a frame **56.** Advantageously, the mounting system **100** may be adapted to be mounted to said frame **56.**

**FIG. 2** depicts the mounting system **100** in further detail. The mounting system **100** is for the vehicle **50.** The mounting system **100** may be adapted to support one or more battery modules **1.** The mounting system may comprise a mounting structure **3.** The mounting structure **3** may comprise a housing **2.** Although it is only described with reference to battery modules **1,** it may be envisioned that the mounting system and mounting arrangement(s) described herein may be used for other components than battery modules. The energy storage system may comprise the one or more battery modules **1.**

The mounting system **100** may comprise one or more mounting arrangements **10** for mounting the one or more battery modules **1** to the housing **2.** Thus, the vehicle **50** may comprise one or more battery modules **1** and the mounting system **100.**

The design and functionality of battery modules are well-known for the skilled person and will not be described in lengthy detail. It may however be envisioned that each battery module **1** comprises one or more battery cells and electrical connections for connecting the battery module **1** to an electrical consumer. In one example, the battery module **1** may be configured to power the electrical motor **51** of the vehicle **50.** Hence, the electrical consumer may be the electrical motor **51** of the vehicle **50.** It may also be envisioned that battery module **1** is configured to power a plurality of consumers including the electrical motor **51** and electrically powered auxiliaries.

The mounting structure **3** may be configured to be mounted to the chassis **55** of the vehicle **50** and preferably the frame **56** of the chassis **55.** In one example, the mounting structure **3** may comprise an interface adapted to be mounted to the chassis **55** by means of one or more fasteners. As the skilled person realizes, the mounting structure **3** may be mountable to the chassis **55** in a multitude of ways readily available and commonly known.

The housing **2** may be configured to accommodate the one or more battery modules **1.** The housing **2** may form a container for the one or more battery modules **1.** In the depicted example, the housing **2** forms a first side wall **221** and a second side wall **222.** The second side wall **222** may be arranged opposite to the first side wall **221.** The one or more battery modules **1** may be mounted between the first side wall **221** and the second side wall **222.**

In one example, the housing **2** may comprise a third side wall **223** and a fourth side wall **224.** The third side wall **223** and the fourth side wall **224** may be arranged substantially perpendicular to the first side wall **221** and the second side wall **222.** The third and side wall **223** and the fourth side wall **224** may connected the first side wall **221** and the second side wall **222.** The fourth side wall **224** may be arranged opposite to the third side wall **223.** The third side wall **223** and the fourth side wall **224** may extend substantially parallel to the one or more battery modules **1.** The first, second, third and fourth side wall may together form a rectangular structure. Although the housing is depicted as a rectangular housing, the housing may depending on the requirements of the implementation be in any suitable shape and preferably in a shape allowing it to provide sufficient protection for the one or more battery modules **1.**

In one example, the housing **2** may be provided with a front cover. In one example, the housing **2** may be provided with a rear cover. The front cover and/or the rear cover may be removably mounted to housing **2** and/or movable relative to the housing **2** to control access to the interior of the housing **2.**

Further referencing **FIG. 2****,** the one or more mounting arrangement **10** may comprise at least one mounting arrangement **10** adapted to engage a first side surface **1A** of a battery module **1** to mount the battery module **1** to the housing **2.** In the depicted example, each battery module **1** is mounted to the housing **2** with a plurality, for example three, of mounting arrangements **10** engaging the first side surface **1A** of the battery module **1.**

As will be described with reference to the subsequent figures, the mounting arrangement **10** may enable the battery module to be mounted at an adjustable distance from the second side **202.** Due to this functionality being provided by the mounting arrangement(s), conventional, cheaper and more readily available fastening members **120** may be utilized for engaging other sides of the one or more battery modules **1** and fixing said sides to the housing **2.** It may however be envisioned mounting arrangements **10** being utilized for this purpose as well. In the depicted example, the mounting system **100** comprises at least one fastening member **120.** The at least one fastening member **120** may be adapted to engage a second side surface **1B** of the battery module **1** to mount said battery module **1.** The second side surface **1B** may be opposite to the first side surface **1A.**

In the example depicted in **FIG. 2****,** the first side surface **1A** of the battery module **1** faces the first side wall **221** of the housing **2.** The at least one mounting arrangement **10** may extend through said first side wall **221** and engage the battery module **1** to mount said battery module **1** to the first side wall **221.** Each mounting arrangement **10** may extend through a hole in the housing **2,** e.g. in the first side wall **221.** In the depicted example, the second side surface **1B** of the battery module **1** faces the second side wall **222** of the housing **2.** The at least one fastening member **120** may extend through said second side wall **222** of the housing **2.** The at least one mounting fastening member **120** may extend through said second side wall **222** and engage the battery module **1** to mount said battery module **1** to the second side wall **222.** Each fastening member **120** may extend through a hole in the housing **2,** e.g. the second side wall **222.**

The mounting system **100** may be adapted to support a plurality of battery modules **1.** In the depicted example, the mounting system **100** is adapted to support three battery modules **1.** The plurality of battery modules **1** may be arranged in a stacked configuration. Accordingly, the plurality of battery modules **1** may be arranged in parallel to each other and distributed along a common center axis **A.**

As depicted in **FIG. 2****,** the housing **2** may be adapted to house the plurality of battery modules **1** in a stacked configuration such that the battery modules **1** are distributed along a common center axis **A** and at distances from each other along said common center axis **A.**

In the depicted examples, the plurality of battery modules **1** are arranged one on top of the other but it may be envisioned that a plurality of battery modules **1** are arranged side by side.

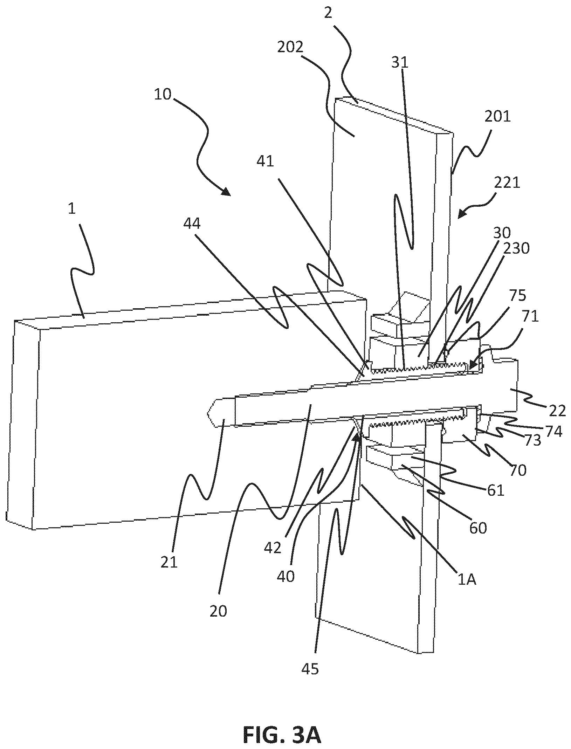

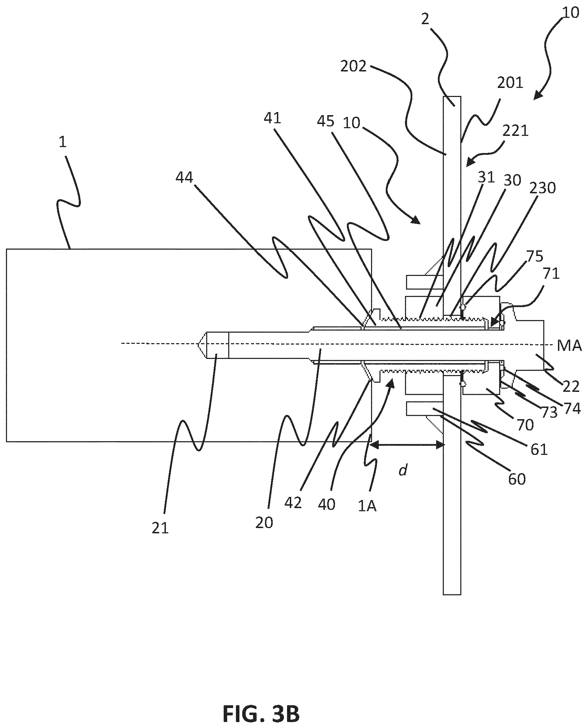

**FIG. 3-6** depicts mounting arrangements **10** for mounting a battery module **1** to the housing **2** of the mounting structure **3** according to the present disclosure according to various examples. Notably, albeit features may be described herein with reference to a particular example, the features may be implementable in any of the herein described examples unless otherwise is stated.

The mounting arrangement **10** may comprise a fastening element **20.** The fastening element **20** may be adapted to engage the battery module **1.** The fastening element **20** may be adapted to engage the battery module **1** from a first side **201** of the housing **2.** The first side **201** may be facing away from the battery module **1.**

The mounting arrangement **10** may comprise a mounting element **30.** The mounting element **30** may be adapted to be fixed relative to the housing **2.** The mounting element **30** may be adapted to be arranged on a second side **202** of the housing **2.** The mounting element **30** may be adapted to engage the housing **2** on the second side **202** of the housing **2.** The second side **202** of the housing **2** may face the battery module **1.** As will be described in further detail with reference to **FIG. 3-6****,** the mounting element **30** may be adapted to be fixed relative to the housing **2** for example by means of being fixated to the housing **2** for example by means of welding or being clamped against the housing **2.**

The mounting arrangement **10** may comprise a compensating element **40.** The compensating element **40** may be mounted to the mounting element **30.** The compensating element **40** may be adapted to abut to an outer surface of the battery module **1.** In the depicted example, the outer surface of the battery module **1** is the first side surface **1A** of the battery module **1.** The compensating element **40** may be adapted to be fixated relative to the housing **2** by the fastening element **20** such that the battery module 1 is fixated at a distance ***d*** from the second side **202.**

The distance ***d*** may extend along a mounting axis **MA** of the mounting arrangement **10.** Further, the fastening element **20** and/or the compensating element **40** may extend along said mounting axis **MA.** Preferably, the first side **201** and the second side **202** of the housing **2** may extend substantially perpendicular to the mounting axis **MA.** The first side **201** and the second side **202** may be substantially parallel. The first side **201** may form an outer surface of the housing **2** facing away from the battery module **1.** The second side **202** may form an outer surface of the housing **2** facing the battery module **1.**

The housing **2** may comprise a mounting hole **230.** The mounting hole **230** may be in the form of a through-hole extending between the first side **201** and the second side **202.** The mounting hole **230** may extend along the mounting axis **MA.**

The fastening element **20** may be adapted to extend from the first side **201** through said mounting hole **230** and into engagement with the battery module **1.**

Although it may be envisioned that the mounting arrangement **10** may be configured to mount a battery module **1** to any part of the housing **2;** in the depicted example, the mounting arrangement **10** is configured to mount a battery module **1** to the first side wall **221** of the housing **2.** The first side **201** may thus be a first side of the first side wall **221** and the second side **202** may be a second, opposite, side of the first side wall **221.**

The mounting element **30** may be adapted to be fixed relative to the housing **2** on the second side **202.** The mounting element **30** may comprise a mounting element aperture **31** extending along the mounting axis **MA.** The compensating element **40** may be inserted in said mounting element aperture **31** to abut to the outer surface of the battery module **1.** Upon mounting of the battery module **1,** the compensating element **40** may be mounted to the mounting element **30** by insertion of the compensating element **40** through the mounting element aperture **31** until end portion of said compensating element **40** abuts to the battery module **1,** the outer surface of the battery module **1.** Upon mounting of the fastening element **20** into the mounting hole **230,** the fastening element **20** may be adapted to exert a clamping force onto the compensating element **40** clamping the compensating element **40** against the battery module **1** and fixating the battery module **1** relative to the housing **2.**

The mounting element **30** may be provided in the form of a nut, collar, bushing or any other type of suitable element readily available for the skilled person. The mounting element **30** may be adapted to be directly, for example via welding or fasteners, or indirectly, for example via contact pressure exerted by other components of the mounting arrangement, fixated relative to the housing **2,** i.e. the second side **202** of the housing **2.** The mounting element **30** may be substantially annular and/or envelop the mounting hole **230** on the second side **202** of the housing **2.**

The compensating element **40** may be arranged along the mounting axis **MA.** Advantageously, the compensating element **40** may be arranged to extend through the mounting element **30** and/or the mounting hole **230.** The compensating element **40** may comprise a proximal end and a distal end relative to the extension of the mounting axis **MA.** The proximal end may be adapted to extend on the first side **201** of the housing **2.** The distal end may be adapted to extend on the second side **202** of the housing **2.** The distal end may be adapted to abut to the battery module **1.**

The compensating element **40** may be provided in the form of a sleeve element. The compensating element **40** may comprise a through-going compensator aperture **45.** The fastening element **20** may be adapted to extend through the compensator aperture **45** upon engaging the battery module **1.**

The compensator aperture **45** may extend along the mounting axis **MA.** The compensator aperture **45** may coincide with the mounting element aperture **31.**

The compensating element **40** may comprise an end portion **41.** The end portion **41** may comprise an end surface **42.** The end surface **42** may be adapted to engage the battery module **1.** The end portion **41** may be considered the distal end portion.

The fastening element **20** may be any form of fastening element suitable for engaging a battery module **1.** Preferably, the fastening element **20** may be a threaded fastening element such as a screw or bolt, but it may be envisioned that for example a guiding pin in combination with a locking arrangement may be utilized.

The fastening element **20** may be adapted to engage a corresponding battery module hole **21** provided in the battery module **1.** The battery module hole **21** may be a threaded hole with threads adapted to be engageable by the treads of the fastening element **20.**

The compensating element **40** and the mounting element **30** may be in adjustable engagement. Advantageously, the compensating element **40** may be adjustable relative to the mounting element **30** to enable the compensating element **40** to properly engage the battery module **1.** In one example, this may be achieved by the mounting element **30** and the compensating element **40** forming a threaded connection. In one example, the mounting element **30** may be provided with threading and the compensating element **40** may be provided with threading such that the compensating element **40** and the mounting element **30** are in adjustable engagement. In one example, the mounting element **30** may be provided with threading and the compensating element **40** may be provided with threading such that the compensating element **40** is adjustable relative to the mounting element **30** for adjustably engaging the battery module **1.** In one example, the mounting element aperture **31** may be provided with inner threading for adjustably engaging with the threading provided on the compensating element **40.**

The mounting arrangement **10** may further comprise a cover member **70.** The cover member **70** may be adapted to be arranged on the first side **201** of the housing **2.** The cover member **70** may be adapted to engage the housing **2** by the fastening element **20.** The cover member **70** may be arranged between the compensating element **40** and the fastening element **20** and may clamp the compensating element **40** against the battery module **1** upon the fastening element **20** engaging the battery module **1.** Although it may be envisioned that the fastening element **20** may provide the clamping force directly onto the housing **2,** the cover member **70** serves to improve the integrity of the housing **2** by for example covering the mounting hole **230** from the first side **201.**

The fastening element **20** may be adapted to clamp the cover member **70** against the housing **2,** thereby clamping the compensating element **40** against the battery module **1.** The clamping force exerted by the fastening element **20** may also cause the compensating element **40** to press against the battery module **1** via the mounting element **30.**

The cover member **70** may comprise a cover through-hole **71.** The fastening element **20** may be adapted to extend through the cover through-hole **71** upon engaging the battery module **1.** The cover through-hole **71** may extend along the mounting axis **MA.** The cover through-hole **71** may be co-axial with the compensator aperture **45.**

In one example, the cover through-hole **71** may be provided with threading adapted to engage threading provided on the compensating element **40.** According to such an example, the cover member **70** may be mounted to the proximal portion of the compensating element **40** by means of said threadings.

The fastening element **20** may comprise a head portion **22.** The head portion **22** may be adapted to exert a contact force on an outer surface **73** of the cover member **70** upon engaging the battery module **1.** The outer surface **73** may be arranged to face away from the first side **201** of the housing **2.**

The outer surface **73** may extend substantially perpendicular to the mounting axis **MA.** The fastening element **20** may have a distal portion and a proximal portion along the mounting axis **MA.** The proximal portion may comprise the head portion **22.** The distal portion may be adapted to engage the battery module **1.**

The head portion **22** may comprise a surface arranged to face the outer surface **73.** Said surface may extend substantially perpendicular to the mounting axis **MA.** Said surface may be formed by a radial flange of the head portion **22.**

In one example, the mounting arrangement **10** may comprise a sealing member **75.** The sealing member **75** may be adapted to seal between the cover member **70** and the first side **201** of the housing **2.** The sealing member **75** may be provided in the form of a gasket. The sealing member **75** may be configured to be arranged in sealing contact with the cover member **70** and the first side **201.** Advantageously, the sealing member **75** is provided on the cover member **70.** The sealing member **75** may thus be mounted to the cover member **70.** It may however be envisioned that the sealing member **75** is attached to the first side **201** of the housing **2** such that the cover member **70** is clamped against the sealing member **75** to form the seal. It may also be envisioned that the sealing member **75** may be attached to a portion of compensating element **40** being arranged on the first side of the housing **2** or a portion of the mounting element **20** being arranged on the first side of the housing **2.**

The sealing member **75** may be configured to seal the mounting hole **230** from the exterior of the first side **201.** The sealing member **75** may thus be arranged to envelop the mounting hole **230.** In one example, the sealing member **75** may be arranged such that it is compressed between the housing **2** and the cover member **70.**

In one example, the mounting arrangement **10** may comprise a sealing element **74.** The sealing element **74** may be adapted to seal between the fastening element **20** and the cover member **70.** The sealing element **74** may be provided in the form of a gasket. The sealing element **74** may be configured to be arranged in sealing contact with the cover member **70** and the fastening element **20.** Advantageously, the sealing element **74** is provided on the cover member **70.** Thereby, the fastening element **20** may be provided in the form of a conventional fastening element **20.** The sealing element **74** may thus be mounted to the cover member **70.** It may however be envisioned that the sealing element **74** is attached to the fastening element **20** such that the fastening element **20** clamps the cover member **70** against the cover member **70** to form the seal. In one example, the sealing element **74** may be arranged on the head of the fastening element **20.** According to such an example, the fastening element **20** may be provided in the form of a sealing screw. The sealing element **74** may be configured to seal the compensator aperture **45** from the exterior of the first side **201.** The sealing element **74** may thus be arranged to envelop the compensator aperture **45.**

The mounting of the battery module **1** to the housing **2** may in one example be described in the following. The mounting element **30** may be fixated relative to the housing **2** on the second side **202** of said housing **2.** The compensating element **40** may be mounted to the mounting element **30,** preferably by means of insertion into the mounting element aperture **31.** Depending on the design of the compensating element **40,** the compensating element **40** may be mounted both from a direction along the mounting axis **MA** from the first side **201** towards the second side **202** or from the second side **202** towards the first side **201.**

The compensating element **40** may be adjusted along the mounting axis **MA** towards the battery module **1** until the end portion **41** of said compensating element **40** abuts to the battery module **1.** The adjustment may be performed by means of rotation of the compensating element **40** due to the threaded connection between the mounting element **30** and the compensating element **40.** This may be particularly advantageous in cases where the mounting element **30** is directly fixated to the housing **2.**

In other examples, the battery module **1** may be arranged to abut to the compensating element **40** and the mounting element **30** may adapted to be adjusted relative to compensating element **40** along the mounting axis **MA** to come into contact with the housing **2** to thereby fixate the compensating element **40.**

The cover member **70** may be aligned with the compensator aperture **45** and clamped into position by the insertion of the fastening element **20** into the compensator aperture **45** and through the cover through-hole **71.** The fastening element **20** may be brought into engagement with the battery module **1,** e.g. the battery module hole **21,** thereby fixating the compensating element **40** into position and the battery module **1** at the distance ***d*** from the second side **202.** The fastening element **20** may be rotated into position due to the threaded connection between the fastening element **20** and the battery module hole **21.**

The design of the components of the mounting arrangement **10** may be adapted in accordance with the intended implementation and requirements. **FIG. 3-6** depicts examples of a mounting arrangement **10** according to the present disclosure.

**FIG. 3A-B**depicts a cross-section of a mounting arrangement **10** according to one example in a perspective view and a conventional cross-section view.

In the depicted example, the end portion **41** of the compensating element **40** may be particularly adapted to engage the battery module **1** to improve upon the stability of the mounting of the battery module **1.**

In the depicted example, the end portion **41** may comprise a conical portion **44.** The conical portion **44** may be provided with the end surface **42** of the compensating element **40.** As aforementioned, the distal end portion of the compensating element **40** may comprise the end portion **41.** The end surface **42** may extend substantially orthogonally to the mounting axis **MA.** The conical portion **44** may taper distally relative to the mounting axis **MA** towards said end surface **42.**

Further referencing **FIG. 3A-B**, the battery module **1** may comprise a corresponding conical depression adapted to receive the conical portion **44.** The battery module hole **21** may be arranged in said conical depression.

As aforementioned, the mounting element **30** may be adapted to be fixed to the housing **2.** There is however a risk due to being subjected to loads and torques that the mounting element **30** starts to rotate relative to the housing **2** which in turn may cause the compensating element **40** to not properly engage with the battery module **1.** To address this, an engagement mechanism **60** may be provided. The engagement mechanism **60** may be arranged such that rotation of the mounting element **30** relative to the housing **2** is blocked due to the mounting element **30** engaging the engagement mechanism **60.**

To accommodate for shifting tolerances in the mounting arrangement **10,** the engagement mechanism **60** may be adapted to enable relative movement and/or rotation to the housing **2** up to a certain limit. Hence, the engagement mechanism **60** may be adapted to engage the mounting element **30** upon the mounting element **30** rotating up to an angle in a first rotation direction and/or a second, opposite, rotation direction. Additionally or alternatively, the engagement mechanism **60** may be adapted to enable relative movement between the mounting element **30** and the housing **2** in a direction extending along the second side of the housing **2.** Thereby, the mounting element **30** may be adjustable to compensate for misalignments between the housing **2** and the mounting element **30** during mounting of the compensating element **40** and/or the fastening element **20.**

The mounting of the mounting arrangement may thus be performed by means of an operator mounting the compensating element **40** into the mounting element **30** from the second side of the housing **2.** The compensating element **40** may be adjusted relative to the mounting element **30** towards the battery module **1** until the compensating element **40** engages the battery module **1** and until the mounting element **30** is blocked by the engagement mechanism **60.**

In the depicted example, the engagement mechanism **60** may comprise one or more blocking element **61.** The one or more blocking element **61** may be adapted to be fix relative to the housing **2.** The one or more blocking element **61** may be adapted to engage the mounting element **30** to block rotation of the mounting element **30.**

The one or more blocking element **61** may be fixated to the first side wall **221** same as the mounting element **30.** In the depicted example, the one or more blocking element **61** may be welded to the housing **2** but it may be envisioned that any type of conventional fastener may be used such as adhesive, screws, bolts etc.

The one or more blocking element **61** are adapted and arranged such that rotation of the mounting element **30** in a rotation direction relative to the housing **2** up to a certain point will cause the mounting element **30** to engage at least one of the one or more blocking element **61.** Said blocking element **61** will prevent any further rotation of the mounting element **30** in said rotation direction.

To improve the reliability of the engagement mechanism **60,** the mounting element **30** may be designed in a manner which enables proper engagement with the engagement mechanism **60.** In the depicted example, this is achieved by means of the mounting element **30** being provided as a square nut. The squared shape causes the corner portions of the mounting element **30** to engage the one or more blocking elements **60** in a reliable manner. Alternatively, the mounting element **30** may for example be provided with protrusions or projections for the same purpose.

In the depicted example, the engagement mechanism **60** comprises a first and second blocking element **61.** The first and second blocking element **61** may be arranged on opposite sides of the mounting element **30.**

The combination of the conical configuration of the compensating element and an engagement mechanism in accordance with the above may be particularly advantageous. This due to engagement mechanism allowing for the mounting element to be slightly moved and rotated prior to the compensating element being brought into contact with the battery module. This will allow alignment to achieve a desirable engagement between the conical surface of the compensating element **40** with the corresponding conical depression of the battery module **1.**

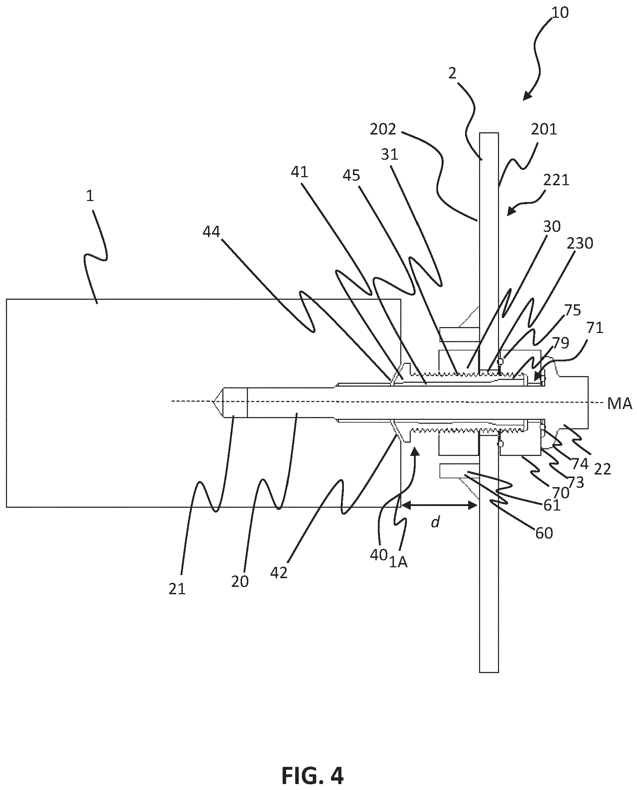

**FIG. 4** depicts a cross-section of an exemplary mounting arrangement **10.** The mounting arrangement **10** may share the features of the mounting arrangement of **FIG. 3A-B** unless otherwise is stated.

Referencing **FIG. 4****,** the compensating element **40** may comprise a torque tool interface **79.** The torque tool interface **79** may be configured to be engaged by a torque tool to enable rotation of the compensating element **40** about the mounting axis **MA** and consequent displacement of the compensating element **40** along the mounting axis **MA.** The proximal end portion of the compensating element **40** may comprise the torque tool interface **79.** The torque tool interface **79** may face away from the first side **201** of the housing **2** such that it may be engaged by the torque tool from said first side **201** of the housing **2.** The torque tool interface **79** may comprise a key grip such as a hex key grip.

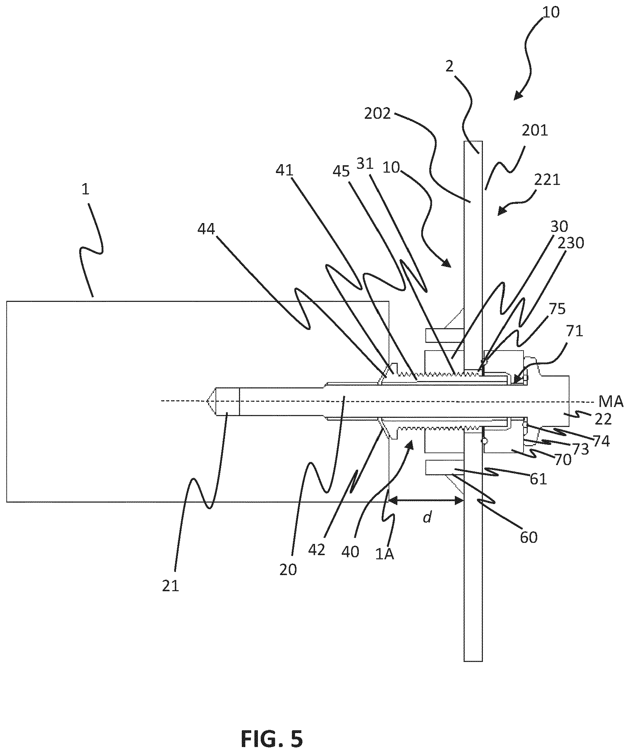

**FIG. 5** depicts a cross-section of an exemplary mounting arrangement **10.** The mounting arrangement **10** may share the features of the mounting arrangement of **FIG. 3A-B** unless otherwise is stated.

Referencing **FIG. 5****,** the proximal end portion of the compensating element **40** may be arranged to protrude on the first side of the housing **2** when the mounting arrangement is mounted to the housing **2.** In the depicted example, the cover member **70** is arranged to at least partially cover a proximal end surface of the proximal end portion of the compensating element **40.** Advantageously, the cover member **70** may be arranged to cover the engagement surfaces of the torque tool interface **79.** The cover member **70** may thus be positioned on the proximal end portion of the compensating element **40** and then be fixated in position by means of the fastening element **20.**

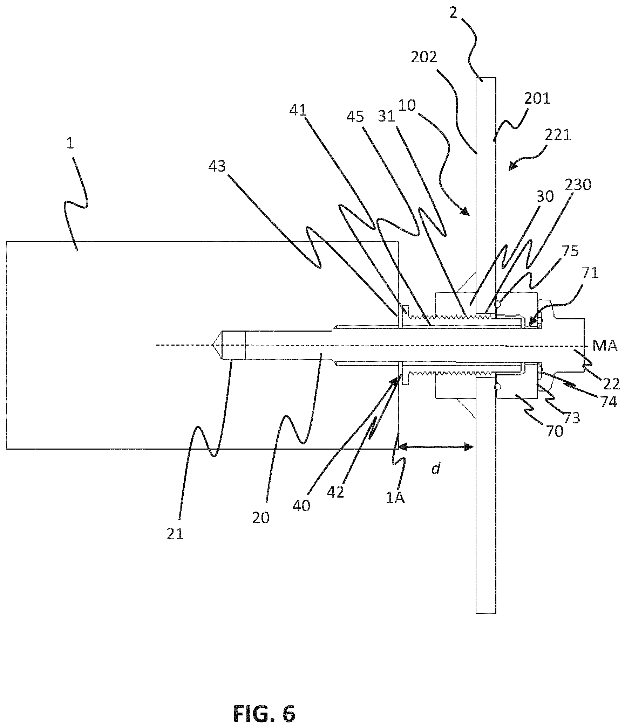

**FIG. 6** depicts a cross-section of an exemplary mounting arrangement **10.** The mounting arrangement **10** may share the features of the mounting arrangement of **FIG. 3A-B** unless otherwise is stated.

As depicted in **FIG. 6****,** the mounting element **30** may be adapted to be welded onto the housing **2.** In the depicted example, the mounting element **30** is welded onto the first side wall **221,** e.g. the second side **202** of the first side wall **221.**

Due to the weld not enabling relative movement between the mounting element **30** and the housing **2,** the design of the compensating element **40** may differ. Referencing **FIG. 6****,** the end portion **41** may comprise a flanged portion **43.** The flanged portion **43** may be provided with the end surface **42.** The flanged portion may be formed by a radial flange protruding in a radial direction relative to the mounting axis **MA.** The end surface **42** may extend substantially orthogonally to the mounting axis **MA.** The flanged portion **43** allows for a secure engagement between the battery module **1** and the compensating element **40** less reliant on a precise alignment between the battery module **1** and the compensating element **40.**

According to the depicted example, the battery module **1** may be mounted to the housing **2** by means of the mounting arrangement **10** by the operator fixating the mounting element **30** to the housing **2.** The compensating element **40** may then be mounted to the mounting element **30** and be adjusted relative to the mounting element **30** to engage the battery module **1.** The compensating element **40** may be adjusted from the first side of the housing **2.** The compensating element **40** may be fixed by means of the fastening element **20** and preferably by the cover member **70** together with the fastening element **20.**

According to an aspect, a method for mounting the battery module **1** to the housing **2** of the mounting structure **3** with the mounting arrangement **10** is provided. The mounting arrangement may be the mounting arrangement **10** according to any one of examples described herein.

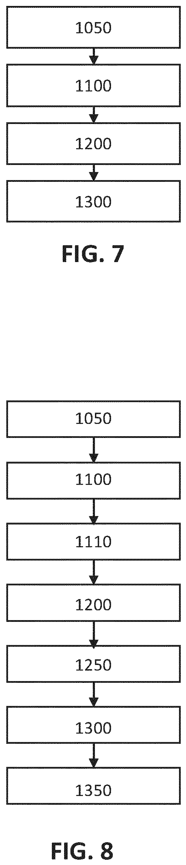

The method according to one example is schematically depicted in **FIG. 7****.**

The method may comprise positioning **1050** the battery module **1** in the housing **2,** arranging **1100** the mounting element **30** relative to the housing **2** on the second side **202** of the housing **2,** abutting **1200** the compensating element **40** to an outer surface of the battery module **1,** and engaging **1300** the fastening element **20** from the first side of the housing **2** with the battery module **1** to fixate the compensating element **40** such that the battery module **1** is fixated at a distance ***d*** from the second side **202.**

**FIG. 8** schematically depicts the method according to one example.

The method may comprise mounting **1110** the compensating element **40** to the mounting element **30.**

The method may comprise arranging **1250** the cover member **70** on the first side **201** of the housing **2** and fixating **1350** the cover member **70** to the housing **2** with the fastening element **20.**

In one example, wherein a mounting element **30** directly mounted to the housing **2** is utilized, the method may comprise fixating the mounting element **30** to the housing **2.** In one example, the method may comprise fixating the mounting element **30** on the second side **202** of the housing **2.** In one example, the method may comprise welding the mounting element **30** to the housing **2.**

Further, the method may comprise adjusting the compensating element **40** relative to the mounting element **30** to engage the battery module **1** and fixating the compensating element **40** by means of the fastening element **20** and preferably also by means of the cover member **70.**

In one example, wherein a mounting element **30** clamped onto to the housing **2** is utilized, the method may comprise mounting the engagement mechanism **60** to the housing **2.** In one example, the method may comprise welding the engagement mechanism **60** to the housing **2** although it may be envisioned that other types of fastening may be utilized.

In one example, the method may comprise aligning the mounting element **30** and the compensating element **40** with the battery module such that the compensating element **40** is in engagement with the battery module **1** and the mounting element **30** engages the engagement mechanism **60** to secure the compensating element **40** and fixating the compensating element **40** and the mounting element **30** by means of the fastening element **20** and preferably also by means of the cover member **70.** In one example, the mounting element **30** and the compensating element **40** may be rotated together such that the compensating element **40** is in engagement with the battery module **1** and the mounting element **30** engages the engagement mechanism **60** to secure the compensating element **40.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A mounting system (**100**) for an energy storage system such as an energy storage system of a vehicle (**50**), marine vessel or motor, or such as an energy storage system of a stationary system such as a building and/or a stationary machinery, the mounting system (**100**) being adapted to support one or more battery modules (**1**), the mounting system (**100**) comprising:
a mounting structure (**3**) comprising a housing (**2**), and
a mounting arrangement (**10**) for mounting the battery module (**1**) to the housing (**2**) of a mounting structure (**3**), the mounting arrangement (**10**) comprising:
a fastening element (**20**) adapted to engage the battery module (**1**) from a first side (**201**) of the housing (**2**) facing away from the battery module (**1**),
a mounting element (**30**) fixed relative to the housing (**2**) and arranged on a second side (**202**) of the housing (**2**) facing the battery module (**1**), and
a compensating element (**40**) mounted to the mounting element (**30**), said compensating element (**40**) being adapted to abut to an outer surface of the battery module (**1**) and to be fixated relative to the housing (**2**) by the fastening element (**20**) such that the battery module (**1**) is fixated at a distance (***d***) from the second side (**202**).

2. The mounting system (**100**) of claim 1, wherein the compensating element (**40**) comprises an end portion (**41**) with an end surface (**42**) adapted to engage the battery module (**1**).

3. The mounting system (**100**) of claim 2, wherein the end portion (**41**) comprises a flanged portion (**43**) provided with the end surface (**42**).

4. The mounting system (**100**) of claim 2, wherein the end portion (**41**) comprises a conical portion (**44**) provided with the end surface (**42**).

5. The mounting system (**100**) of any one of claims 1-4, wherein the mounting element (**30**) and the compensating element (**40**) are provided with threading such that the compensating element (**40**) and the mounting element (**30**) are in adjustable engagement.

6. The mounting system (**100**) of any one of claims 1-5, wherein the mounting arrangement (**10**) further comprises an engagement mechanism (**60**) adapted to counteract rotation of the mounting element (**30**) by being arranged such that rotation of the mounting element (**30**) relative to the housing (**2**) is blocked due to the mounting element (**30**) engaging the engagement mechanism (**60**).

7. The mounting system (**100**) of claim 6, wherein the engagement mechanism (**60**) comprises one or more blocking element (**61**) adapted to be fix relative to the housing (**2**) and to engage the mounting element (**30**) to block rotation of said mounting element (**30**).

8. The mounting system (**100**) of any one of claims 1-7, wherein the mounting arrangement (**10**) further comprises a cover member (**70**) adapted to be arranged on the first side (**201**) of the housing (**2**) and be fixated to the housing (**2**) by the fastening element (**20**).

9. The mounting system (**100**) of claim 8, wherein the mounting arrangement (**10**) further comprises a sealing member (**75**) adapted to seal between the cover member (**70**) and the first side (**201**).

10. The mounting system (**100**) of claims 8-9, wherein the mounting arrangement (**10**) further comprises a sealing element (**74**) adapted to seal between the fastening element (**20**) and the cover member (**70**).

11. A vehicle (**50**) comprising one or more battery modules (**1**) and a mounting system (**100**) of any one of claim 1-10.

12. A method for mounting a battery module (**1**) to a housing (**2**) of a mounting structure (**3**) with a mounting arrangement (**10**) of a mounting system (**100**) of any one of claim 1-10, the method comprising:
positioning (**1050**) the battery module (**1**) in the housing (**2**),
arranging (**1100**) the mounting element (**30**) relative to the housing (**2**) on the second side (**202**) of the housing (**2**),
abutting (**1200**) the compensating element (**40**) to an outer surface of the battery module (**1**), and
engaging (**1300**) the fastening element (**20**) from the first side (**201**) of the housing (**2**) with the battery module (**1**) to fixate the compensating element (**40**) such that the battery module (**1**) is fixated at a distance (***d***) from the second side (**202**),
the method further comprising:
mounting (**1110**) the compensating element (**40**) to the mounting element (**30**).

13. The method of claim 12, further comprising:
arranging (**1250**) the cover member (**70**) on the first side (**201**) of the housing (**2**), and
fixating (**1350**) the cover member (**70**) to the housing (**2**) with the fastening element (**20**).

## Patentansprüche

1. Ein Montagesystem (100) für ein Energiespeichersystem, wie beispielsweise ein Energiespeichersystem eines Fahrzeugs (50), eines Schiffes oder eines Motors, oder wie ein Energiespeichersystem eines stationären Systems wie eines Gebäudes und/oder einer stationären Maschine, wobei das Montagesystem (100) dazu geeignet ist, ein oder mehrere Batteriemodule (1) zu tragen, wobei das Montagesystem (100) Folgendes umfasst:
- eine Montagestruktur (3), die eine Gehäusung (2) umfasst, und
- eine Montageanordnung (10) zum Montieren des Batteriemoduls (1) an der Gehäusung (2) einer Montagestruktur (3), wobei die Montageanordnung (10) Folgendes umfasst:
- ein Befestigungselement (20), das dazu geeignet ist, in das Batteriemodul (1) von einer ersten Seite (201) des Gehäuses (2) einzugreifen, die von dem Batteriemodul (1) abgewandt ist,
- ein Montierelement (30), das relativ zur Gehäusung (2) fixiert ist und auf einer zweiten Seite (202) der Gehäusung (2) angeordnet ist, die dem Batteriemodul (1) zugewandt ist, und
- ein Ausgleichselement (40), das an dem Montierelement (30) montiert ist, wobei das Ausgleichselement (40) dazu geeignet ist, an eine Außenfläche des Batteriemoduls (1) anzuliegen und relativ zur Gehäusung (2) durch das Befestigungselement (20) fixiert zu werden, so dass das Batteriemodul (1) in einem Abstand (d) von der zweiten Seite (202) fixiert ist.

2. Das Montagesystem (100) gemäß Anspruch 1, wobei das Ausgleichselement (40) einen Endabschnitt (41) mit einer Endfläche (42) umfasst, die dazu geeignet ist, in das Batteriemodul (1) einzugreifen.

3. Das Montagesystem (100) gemäß Anspruch 2, wobei der Endabschnitt (41) einen Flanschabschnitt (43) umfasst, der die Endfläche (42) aufweist.

4. Das Montagesystem (100) gemäß Anspruch 2, wobei der Endabschnitt (41) einen konischen Abschnitt (44) umfasst, der die Endfläche (42) aufweist.

5. Das Montagesystem (100) gemäß einem der Ansprüche 1-4, wobei das Montierelement (30) und das Ausgleichselement (40) mit Gewinde versehen sind, so dass das Ausgleichselement (40) und das Montierelement (30) in einer einstellbaren Verbindung stehen.

6. Das Montagesystem (100) gemäß einem der Ansprüche 1-5, wobei die Montageanordnung (10) ferner einen Eingriffsmechanismus (60) umfasst, der dazu geeignet ist, eine Drehung des Montierelements (30) zu verhindern, indem er so angeordnet ist, dass eine Drehung des Montierelements (30) relativ zur Gehäusung (2) blockiert wird, da das Montierelement (30) in den Eingriffsmechanismus (60) eingreift.

7. Das Montagesystem (100) gemäß Anspruch 6, wobei der Eingriffsmechanismus (60) ein oder mehrere Blockelemente (61) umfasst, die dazu geeignet sind, relativ zur Gehäusung (2) fixiert zu werden und in das Montierelement (30) einzugreifen, um eine Drehung des Montierelements (30) zu blockieren.

8. Das Montagesystem (100) gemäß einem der Ansprüche 1-7, wobei die Montageanordnung (10) ferner ein Deckenelement (70) umfasst, das dazu geeignet ist, auf der ersten Seite (201) der Gehäusung (2) angeordnet und durch das Befestigungselement (20) an der Gehäusung (2) fixiert zu werden.

9. Das Montagesystem (100) gemäß Anspruch 8, wobei die Montageanordnung (10) ferner ein Dichtungselement (75) umfasst, das dazu geeignet ist, zwischen dem Deckenelement (70) und der ersten Seite (201) eine Abdichtung zu bilden.

10. Das Montagesystem (100) gemäß den Ansprüchen 8-9, wobei die Montageanordnung (10) ferner ein Dichtelement (74) umfasst, das dazu geeignet ist, zwischen dem Befestigungselement (20) und dem Deckenelement (70) eine Abdichtung zu bilden.

11. Ein Fahrzeug (50), das ein oder mehrere Batteriemodule (1) und ein Montagesystem (100) gemäß einem der Ansprüche 1-10 umfasst.

12. Ein Verfahren zum Montieren eines Batteriemoduls (1) an einer Gehäusung (2) einer Montagestruktur (3) mit einer Montageanordnung (10) eines Montagesystems (100) gemäß einem der Ansprüche 1-10, wobei das Verfahren Folgendes umfasst:
- Positionieren (1050) des Batteriemoduls (1) in der Gehäusung (2),
- Anordnen (1100) des Montierelements (30) relativ zur Gehäusung (2) auf der zweiten Seite (202) der Gehäusung (2),
- Anlegen (1200) des Ausgleichselements (40) an eine Außenfläche des Batteriemoduls (1) und
- Eingreifen (1300) des Befestigungselements (20) von der ersten Seite (201) der Gehäusung (2) in das Batteriemodul (1), um das Ausgleichselement (40) zu fixieren, so dass das Batteriemodul (1) in einem Abstand (d) von der zweiten Seite (202) fixiert ist,
wobei das Verfahren ferner Folgendes umfasst:
- Montieren (1110) des Ausgleichselements (40) an dem Montierelement (30).

13. Das Verfahren gemäß Anspruch 12, das ferner Folgendes umfasst:
- Anordnen (1250) des Deckenelements (70) auf der ersten Seite (201) der Gehäusung (2) und
- Fixieren (1350) des Deckenelements (70) an der Gehäusung (2) mit dem Befestigungselement (20).

## Revendications

1. Un système de montage (100) pour un système de stockage d'énergie tel qu'un système de stockage d'énergie d'un véhicule (50), d'un navire ou d'un moteur, ou tel qu'un système de stockage d'énergie d'un système fixe tel qu'un bâtiment et/ou une machine fixe, le système de montage (100) étant adapté à supporter un ou plusieurs modules de batterie (1), le système de montage (100) comprenant :
- une structure de montage (3) comprenant un boîtier (2), et
- un agencement de montage (10) pour monter le module de batterie (1) sur le boîtier (2) d'une structure de montage (3), l'agencement de montage (10) comprenant :
- un élément de fixation (20) adapté à engager le module de batterie (1) depuis un premier côté (201) du boîtier (2) faisant face à l'opposé du module de batterie (1),
- un élément de montage (30) fixé par rapport au boîtier (2) et agencé sur un second côté (202) du boîtier (2) faisant face au module de batterie (1), et
- un élément de compensation (40) monté sur l'élément de montage (30), ledit élément de compensation (40) étant adapté à venir en butée contre une surface extérieure du module de batterie (1) et à être fixé par rapport au boîtier (2) par l'élément de fixation (20) de telle sorte que le module de batterie (1) soit fixé à une distance (d) du second côté (202).

2. Le système de montage (100) selon la revendication 1, dans lequel l'élément de compensation (40) comprend une portion d'extrémité (41) avec une surface d'extrémité (42) adaptée à engager le module de batterie (1).

3. Le système de montage (100) selon la revendication 2, dans lequel la portion d'extrémité (41) comprend une portion à bride (43) pourvue de la surface d'extrémité (42).

4. Le système de montage (100) selon la revendication 2, dans lequel la portion d'extrémité (41) comprend une portion conique (44) pourvue de la surface d'extrémité (42).

5. Le système de montage (100) selon l'une quelconque des revendications 1 à 4, dans lequel l'élément de montage (30) et l'élément de compensation (40) sont pourvus d'un filetage de telle sorte que l'élément de compensation (40) et l'élément de montage (30) soient en engagement réglable.

6. Le système de montage (100) selon l'une quelconque des revendications 1 à 5, dans lequel l'agencement de montage (10) comprend en outre un mécanisme d'engagement (60) adapté à contrecarrer la rotation de l'élément de montage (30) en étant agencé de telle sorte que la rotation de l'élément de montage (30) par rapport au boîtier (2) soit bloquée du fait que l'élément de montage (30) engage le mécanisme d'engagement (60).

7. Le système de montage (100) selon la revendication 6, dans lequel le mécanisme d'engagement (60) comprend un ou plusieurs élément de blocage (61) adapté à être fixe par rapport au boîtier (2) et à engager l'élément de montage (30) pour bloquer la rotation dudit élément de montage (30).

8. Le système de montage (100) selon l'une quelconque des revendications 1 à 7, dans lequel l'agencement de montage (10) comprend en outre un organe de couvercle (70) adapté à être agencé sur le premier côté (201) du boîtier (2) et à être fixé au boîtier (2) par l'élément de fixation (20).

9. Le système de montage (100) selon la revendication 8, dans lequel l'agencement de montage (10) comprend en outre un organe d'étanchéité (75) adapté à assurer l'étanchéité entre l'organe de couvercle (70) et le premier côté (201).

10. Le système de montage (100) selon les revendications 8 à 9, dans lequel l'agencement de montage (10) comprend en outre un élément d'étanchéité (74) adapté à assurer l'étanchéité entre l'élément de fixation (20) et l'organe de couvercle (70).

11. Un véhicule (50) comprenant un ou plusieurs modules de batterie (1) et un système de montage (100) selon l'une quelconque des revendications 1 à 10.

12. Un procédé pour monter un module de batterie (1) sur un boîtier (2) d'une structure de montage (3) avec un agencement de montage (10) d'un système de montage (100) selon l'une quelconque des revendications 1 à 10, le procédé comprenant:
- positionner (1050) le module de batterie (1) dans le boîtier (2),
- agencer (1100) l'élément de montage (30) par rapport au boîtier (2) sur le second côté (202) du boîtier (2),
- mettre en butée (1200) l'élément de compensation (40) contre une surface extérieure du module de batterie (1), et
- engager (1300) l'élément de fixation (20) depuis le premier côté (201) du boîtier (2) avec le module de batterie (1) pour fixer l'élément de compensation (40) de telle sorte que le module de batterie (1) soit fixé à une distance (d) du second côté (202),
le procédé comprenant en outre :
- monter (1110) l'élément de compensation (40) sur l'élément de montage (30).

13. Le procédé selon la revendication 12, comprenant en outre :
- agencer (1250) l'organe de couvercle (70) sur le premier côté (201) du boîtier (2), et
- fixer (1350) l'organe de couvercle (70) au boîtier (2) avec l'élément de fixation (20).
